# FASCICULE DE BREVET EUROPEEN

(11) **EP 4 381 182 B1**
(45) Date de publication et mention de la délivrance du brevet: **26.11.2025**
(21) Numéro de dépôt: 22743499.0
(22) Date de dépôt: 18.07.2022
(51) Int. Cl.: F02C 3/22, F02C 9/40, F02C 7/224

(54) **SYSTÈME DE CONDITIONNEMENT DE CARBURANT POUR ALIMENTER UNE TURBOMACHINE D'AÉRONEF ET PROCÉDÉ D'ALIMENTATION EN CARBURANT D'UNE TURBOMACHINE D'AÉRONEF**
SYSTEM ZUR AUFBEREITUNG VON KRAFTSTOFF ZUR VERSORGUNG EINER FLUGZEUGTURBOMASCHINE UND VERFAHREN ZUR VERSORGUNG EINER FLUGZEUGTURBOMASCHINE MIT KRAFTSTOFF
SYSTEM FOR CONDITIONING FUEL FOR SUPPLYING AN AIRCRAFT TURBOMACHINE AND METHOD FOR SUPPLYING FUEL TO AN AIRCRAFT TURBOMACHINE

(30) Priorité: 03.08.2021 FR 2108448
(43) Date de publication de la demande: 12.06.2024
(73) Titulaire: SAFRAN, 75015 Paris (FR)
(72) Inventeur: LAMBERT, Pierre-Alain Marie Cyrille, 77550 MOISSY-CRAMAYEL (FR)
(74) Mandataire: Argyma
(86) Numéro de dépôt international: PCT/EP2022/070031
(87) Numéro de publication internationale: WO 2023/011900

(56) Documents cités:
- EP-A2- 2 925 981
- US-A1- 2014 318 134

## Description

### DOMAINE TECHNIQUE

La présente invention concerne le domaine des aéronefs comportant des turbomachines alimentées par du carburant stocké dans un réservoir cryogénique.

Il est connu de stocker du carburant, en particulier de l'hydrogène, sous forme liquide pour limiter l'encombrement et la masse des réservoirs de l'aéronef. A titre d'exemple, le carburant est stocké à une température de l'ordre de 20 à 22 Kelvins (- 253 à -251°C) dans un réservoir cryogénique de l'aéronef.

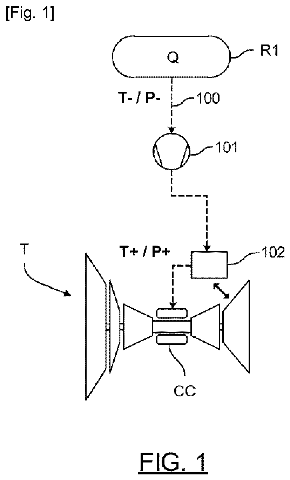

Afin de pouvoir être injecté dans la chambre de combustion d'une turbomachine, le carburant doit être conditionné, c'est-à-dire pressurisé et chauffé, afin de permettre une combustion optimale. Un conditionnement est par exemple nécessaire pour réduire le risque de givrage de la vapeur d'eau contenue dans l'air qui circule dans la turbomachine, en particulier, au niveau des injecteurs de carburant de la turbomachine. En référence à la figure 1, il est représenté un système de conditionnement SCAA selon l'art antérieur comprenant un circuit de carburant 100 relié en entrée à un réservoir cryogénique R1 et en sortie à la chambre de combustion CC d'une turbomachine T. Un flux de carburant Q circulant d'amont en aval dans le circuit de carburant 100 traverse successivement une pompe mécanique 101 et un module de chauffage 102.

En pratique, pour réaliser le pompage, une pompe mécanique 101 de type volumétrique ou centrifuge est généralement utilisée. Une telle pompe mécanique 101 présente de nombreux inconvénients sur le plan du rendement. Une pompe mécanique 101 ne permet pas de fonctionner sur une large gamme de débit/pression pour un rendement élevé. Aussi, en pratique, il est nécessaire d'utiliser une pompe mécanique 101 dont le point de fonctionnement n'est pas optimal et qui requiert de s'éloigner de la plage d'utilisation conseillée de ladite pompe mécanique 101, ce qui augmente les contraintes appliquées à la pompe mécanique 101 et réduit son rendement. Une telle pompe mécanique 101 ne peut ainsi pas adapter son débit de manière optimale en fonction des besoins de la turbomachine T. A titre d'exemple, pour un avion de transport civil, le débit de consigne de la turbomachine T dans une phase de décollage peut être plus de trois fois supérieur au débit de consigne dans une phase de croisière.

De plus, la pression de refoulement d'une pompe mécanique 101 se réduit à mesure que le débit augmente, ce qui va à l'encontre du besoin de la turbomachine T pour laquelle la pression d'injection et le débit injecté croissent tous deux avec la poussée générée.

L'invention vise ainsi à éliminer au moins certains de ces inconvénients en proposant un nouveau système de conditionnement de carburant permettant une compression et un chauffage avec un meilleur rendement et une plus grande opérabilité.

On connait dans l'art antérieur par le document US20140318134A1 un système pour fournir un carburant gazeux à une turbine à gaz à partir d'une source de carburant liquide.

### PRESENTATION DE L'INVENTION

L'invention concerne un système de conditionnement de carburant configuré pour alimenter une turbomachine d'aéronef, dite turbomachine principale, à partir de carburant issu d'un réservoir cryogénique, la turbomachine principale ayant un débit de consigne de carburant qui est fonction de la phase de déplacement de l'aéronef, le système de conditionnement comprenant :
- un circuit de carburant relié en entrée au réservoir cryogénique et en sortie à la turbomachine principale,
- une pompe configurée pour faire circuler un flux de carburant d'amont en aval dans le circuit de carburant, la pompe étant configurée pour fonctionner à un régime constant prédéterminé,
- au moins un échangeur de chaleur configuré pour transmettre des calories issues d'une source chaude au flux de carburant via un circuit de chauffage,
- un organe d'alimentation de la turbomachine principale avec un flux de carburant, l'organe d'alimentation définissant une section de passage prédéterminée, l'organe d'alimentation étant configuré pour fournir un débit d'alimentation nominal lorsque la pompe fonctionne à un régime constant prédéterminé,
- au moins un réservoir tampon configuré pour alimenter la turbomachine principale parallèlement à l'organe d'alimentation, le réservoir tampon étant configuré pour être alimenté par un flux de carburant,
- au moins une première vanne de contrôle de l'alimentation du réservoir tampon en flux de carburant,
- au moins une deuxième vanne de contrôle de la distribution du flux de carburant issu du réservoir tampon, et
- un dispositif de régulation configuré pour ouvrir la deuxième vanne lorsque le débit de consigne est supérieur au débit d'alimentation nominal.

Par la suite, par régime/débit constant prédéterminé, on entend un régime/débit dont la variation n'excède pas +/-10% par rapport à une valeur de régime/débit déterminée.

Grâce à l'invention, on peut utiliser une pompe de conception simple et peu onéreuse étant donné qu'elle fonctionne à un régime constant prédéterminé. De manière avantageuse, le système de conditionnement peut suivre le débit de consigne en régulant de manière dynamique la distribution du carburant du réservoir tampon, en particulier, au cours d'une phase de décollage dans laquelle les besoins en carburant sont élevés.

De préférence, l'échangeur de chaleur est positionné en amont du réservoir tampon. De manière alternative, l'échangeur de chaleur est positionné en aval du réservoir tampon.

De préférence, le dispositif de régulation est configuré pour fermer la deuxième vanne lorsque le débit de consigne est inférieur au débit d'alimentation nominal. Ainsi, le carburant du réservoir tampon est utilisé avec parcimonie, de préférence, uniquement lors d'une phase de décollage.

De préférence encore, le dispositif de régulation est configuré pour fermer la première vanne lorsque le débit de consigne est supérieur au débit d'alimentation nominal. Ainsi, l'organe d'alimentation permet de fournir le débit d'alimentation nominal.

De préférence, la première vanne ayant un degré d'ouverture paramétrable, le dispositif de régulation est configuré pour faire varier le degré d'ouverture de la première vanne en fonction d'une comparaison entre le débit d'alimentation nominal et le débit de consigne. De manière préférée, le degré d'ouverture obéit à une loi d'ouverture déterminée f du type f(d6n - dT). De manière avantageuse, le surplus de carburant est stocké de manière dynamique dans le réservoir tampon, ce qui est très avantageux. Ainsi, lorsque l'écart est faible, le réservoir tampon se remplit de manière douce pour absorber le surplus de débit. Cela permet d'éviter d'utiliser la pompe avec un régime trop élevé. A l'inverse, lorsque l'écart est important, le réservoir tampon se remplit de manière rapide pour absorber le surplus de débit. Le réservoir tampon dispose ainsi de suffisamment de carburant pour assurer une nouvelle phase de décollage.

De manière alternative, le dispositif de régulation est configuré pour ouvrir la première vanne selon un premier degré d'ouverture lorsque la différence entre le débit d'alimentation nominal et le débit de consigne est inférieure à un écart prédéterminé. Ainsi, lorsque l'écart est faible, le réservoir tampon se remplit de manière douce pour absorber le surplus de débit. Cela permet d'éviter d'utiliser la pompe avec un régime trop élevé.

De manière alternative, le dispositif de régulation est configuré pour ouvrir la première vanne selon un deuxième degré d'ouverture, supérieur au premier degré d'ouverture, lorsque la différence entre le débit d'alimentation nominal et le débit de consigne est supérieure à l'écart prédéterminé. Ainsi, lorsque l'écart est important, le réservoir tampon se remplit de manière rapide pour absorber le surplus de débit. Le réservoir tampon dispose ainsi de suffisamment de carburant pour assurer une nouvelle phase de décollage
Selon un aspect de l'invention, le système de conditionnement de carburant comprend au moins un échangeur de chaleur auxiliaire monté entre la deuxième vanne et la turbomachine principale de manière à chauffer le flux de carburant préalablement à son injection dans la turbomachine principale. Ainsi, le refroidissement du carburant du réservoir tampon suite à sa détente thermodynamique peut être compensé de manière à injecter du carburant dans la turbomachine principale avec une température optimale, de préférence, constante.

De manière préférée, la source chaude est un dispositif de génération de puissance auxiliaire alimenté par le circuit de carburant. Ainsi, la source chaude est autonome.

De préférence, le dispositif de génération de puissance auxiliaire est configuré pour fonctionner à régime constant, en particulier, sur une plage de fonctionnement réduite. Cela permet de limite son coût et son encombrement.

De manière préférée, le dispositif de génération de puissance auxiliaire est une turbomachine auxiliaire ou une pile à combustible. Une pile à combustible possède un rendement élevé sur une plage de fonctionnement réduite, ce qui rend son utilisation très pertinente dans ce contexte.

De préférence, le système de conditionnement de carburant comprend au moins un organe propulsif et un système d'entrainement dudit organe propulsif, le système d'entrainement étant configuré pour être alimenté par la turbomachine principale et par le dispositif de génération de puissance auxiliaire. La puissance du dispositif de génération de puissance auxiliaire peut être mise à profit afin de réduire la puissance de la turbomachine principale qui peut ainsi posséder une structure moins encombrante et onéreuse.

De préférence, le carburant est du dihydrogène. Un tel carburant est particulièrement adapté pour une pile à combustible.

De manière préférée, le débit d'alimentation nominal est déterminé pour être supérieur au débit de consigne en phase de croisière et inférieur au débit de consigne en phase de décollage. Ainsi, il existe toujours un surplus de débit pour remplir le réservoir tampon en phase de croisière.

Il est également présenté un aéronef comprenant un système de conditionnement tel que présenté précédemment.

L'invention concerne également un procédé d'alimentation selon la revendication 12.

De préférence, le procédé comporte une étape consistant à alimenter le réservoir tampon en carburant lorsque le débit de consigne est inférieur au débit d'alimentation nominal.

De préférence, le procédé comporte une étape consistant à faire varier l'alimentation du réservoir tampon en fonction d'une comparaison entre le débit d'alimentation nominal et le débit de consigne.

Il est également présenté un procédé d'utilisation d'un système de conditionnement en carburant tel que présenté précédemment, la turbomachine principale ayant un débit de consigne qui est fonction de la phase de déplacement de l'aéronef, la pompe fonctionnant à un régime constant prédéterminé, le procédé comprenant au moins une étape consistant à ouvrir la deuxième vanne lorsque le débit de consigne est supérieur au débit d'alimentation nominal.

### PRESENTATION DES FIGURES

L'invention sera mieux comprise à la lecture de la description qui va suivre, donnée à titre d'exemple, et se référant aux figures suivantes, données à titre d'exemples non limitatifs, dans lesquelles des références identiques sont données à des objets semblables.
La figure 1 est une représentation schématique d'un système de conditionnement de carburant selon l'art antérieur.
La figure 2 est une représentation schématique d'un système de conditionnement de carburant selon une première forme de réalisation de l'invention, l'échangeur de chaleur étant en position aval.
La figure 3 est une représentation schématique de différents débits de carburant au cours des différentes phases d'utilisation de la turbomachine principale.
La figure 4 est une représentation schématique de l'évolution de la pression dans le réservoir tampon au cours des différentes phases d'utilisation de la turbomachine principale.
La figure 5 est une représentation schématique de différentes températures au cours des différentes phases d'utilisation de la turbomachine principale.
La figure 6 est une représentation schématique d'un système de conditionnement de carburant selon une deuxième forme de réalisation de l'invention.
La figure 7 est une représentation schématique d'un système de conditionnement de carburant selon une troisième forme de réalisation de l'invention.
La figure 8 est une représentation schématique des étapes de mise en oeuvre d'un procédé d'utilisation d'un système conditionnement de carburant.
La figure 9 est une représentation schématique d'un système de conditionnement de carburant selon une variante de la première forme de réalisation de l'invention, l'échangeur de chaleur étant en position amont.

Il faut noter que les figures exposent l'invention de manière détaillée pour mettre en oeuvre l'invention, lesdites figures pouvant bien entendu servir à mieux définir l'invention le cas échéant.

### DESCRIPTION DETAILLEE DE L'INVENTION

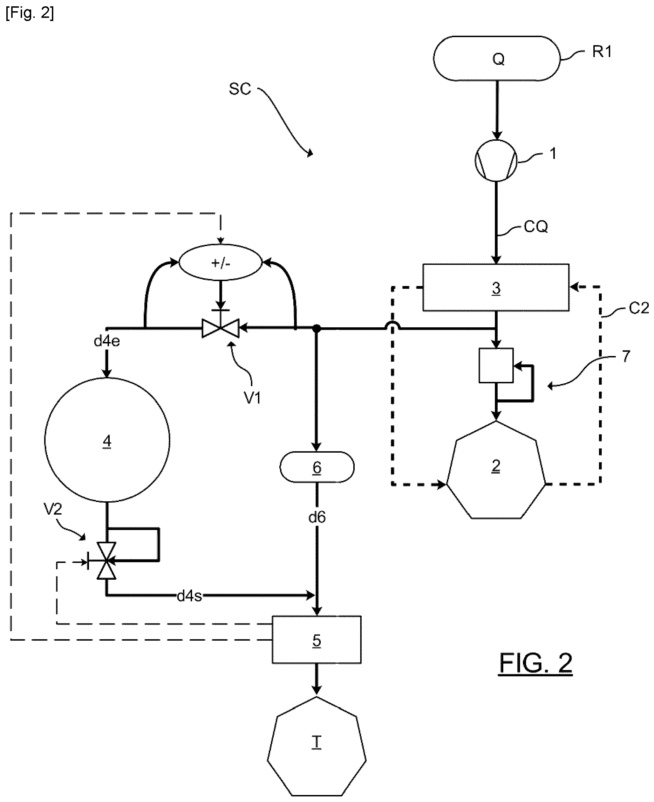

En référence à la figure 2, il est représenté un système de conditionnement de carburant SC configuré pour alimenter une turbomachine d'aéronef, dite turbomachine principale T, à partir de carburant Q issu d'un réservoir cryogénique R1. La turbomachine principale T est configurée pour assurer la propulsion de l'aéronef, notamment, par entrainement d'au moins un organe propulsif (non représenté sur la figure 2).

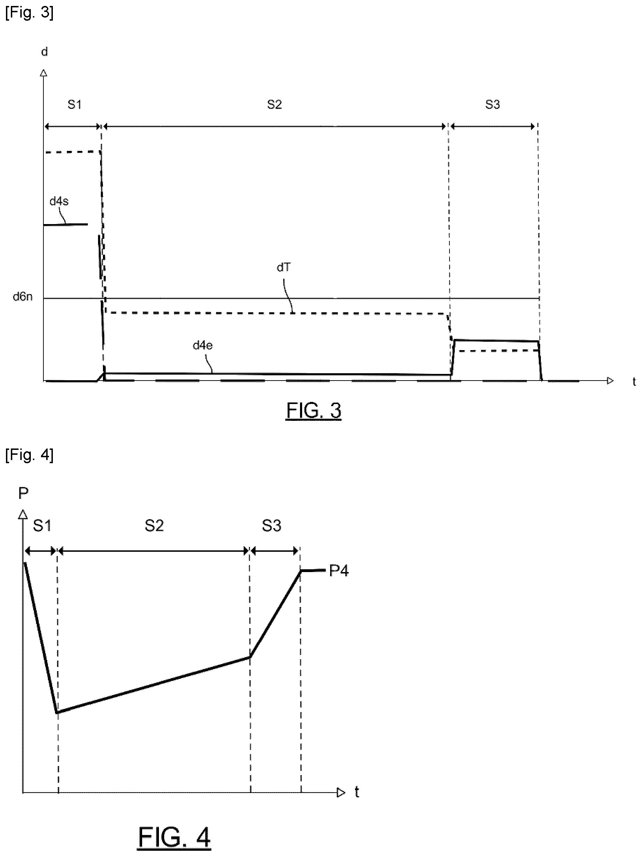

La turbomachine principale T possède un débit de consigne dT de carburant Q qui est fonction de la phase d'utilisation de la turbomachine principale T. Ainsi, en référence à la figure 3, le débit de consigne dT est très élevé lors d'une phase de décollage S1, moyen lors d'une phase de croisière S2 et faible lors d'une phase d'atterrissage S3.

Dans cet exemple, le carburant est de l'hydrogène liquide mais l'invention s'applique à d'autres types de carburant, par exemple, du méthane liquide ou du gaz naturel liquéfié.

Première forme de réalisation (Figure 2)

Selon une première forme de réalisation, en référence à la figure 2, le système de conditionnement SC comprend un circuit de carburant CQ (trait continu sur la figure 2) relié en entrée au réservoir cryogénique R1 et en sortie à la turbomachine principale T. Le système de conditionnement SC comporte également une pompe 1, de préférence haute pression, configurée pour faire circuler un flux de carburant Q d'amont en aval dans le circuit de carburant CQ.

De manière préférée, la pompe 1 est configurée pour fonctionner à un régime constant, en particulier, correspondant à un rendement élevé. La pompe 1 fournit avantageusement une surpression constante. Un tel régime constant permet de générer un débit constant de carburant par l'organe d'alimentation 6 comme cela sera présenté par la suite. Une telle pompe 1, ayant une plage de fonctionnement restreinte, possède une grande fiabilité, un faible encombrement et un coût réduit.

En référence à la figure 2, le système de conditionnement SC comprend en outre un échangeur de chaleur 3 configuré pour transmettre des calories d'une source chaude au flux de carburant Q prélevé par la pompe 1 afin de le réchauffer pour permettre son injection de manière optimale dans la turbomachine principale T.

Dans cet exemple, la source chaude se présente sous la forme d'un dispositif de génération de puissance auxiliaire 2 qui est configuré pour générer des calories et les fournir à l'échangeur de chaleur 3. Autrement dit, le dispositif de génération de puissance auxiliaire 2 remplit une fonction de chauffage afin d'augmenter la température du flux de carburant Q afin que celui-ci puisse être injecté dans la turbomachine principale T. Dans cet exemple, le dispositif de génération de puissance auxiliaire 2 est directement alimenté par le circuit de carburant Q et est ainsi autonome. Le dispositif de génération de puissance auxiliaire 2 est alimenté par une fraction du flux de carburant réchauffé Q. Dans cet exemple, le système de conditionnement de carburant SC comprend un détendeur 7 configuré pour détendre le flux de carburant Q avant d'alimenter le dispositif de génération de puissance auxiliaire 2. Ainsi, le dispositif de génération de puissance auxiliaire 2 est alimenté de manière optimale.

De préférence, les calories issues du dispositif de génération de puissance auxiliaire 2 sont transmises au flux de carburant Q via un circuit de chauffage C2, par exemple, un circuit de refroidissement du dispositif de génération de puissance auxiliaire 2 tel qu'un circuit d'huile ou un circuit d'air d'échappement. A titre d'exemple, les calories générées par le dispositif de génération de puissance auxiliaire 2 peuvent être issues de la chaleur fatale dudit dispositif de génération de puissance auxiliaire 2 ou d'un de ses circuits de refroidissement (huile, etc.).

De préférence, le dispositif de génération de puissance auxiliaire 2 fonctionne à un régime constant, en particulier, correspondant à un rendement élevé. Son régime est déterminé pour fournir un chauffage adapté. Un tel dispositif de génération de puissance auxiliaire 2, ayant une plage de fonctionnement restreinte, possède une grande fiabilité, un faible encombrement et un coût réduit.

Selon un aspect, le dispositif de génération de puissance auxiliaire 2 est une turbomachine auxiliaire et permet de produire une puissance mécanique pouvant être utilisée par l'aéronef. Les gaz d'échappement ou l'huile de la turbomachine auxiliaire peuvent notamment être utilisés comme circuit de chauffage C2. Selon un autre aspect, le dispositif de génération de puissance auxiliaire 2 est une pile à combustible, en particulier, alimentée en dihydrogène. Une telle pile à combustible 2 permet de générer une puissance électrique pouvant être utilisée par l'aéronef. Des exemples d'utilisation seront présentés par la suite.

Le système de conditionnement SC comprend en outre un organe d'alimentation 6 de la turbomachine principale T avec un flux de carburant Q réchauffé, l'organe d'alimentation 6 définissant une section de passage prédéterminée. De manière préférée, l'organe d'alimentation 6 est un orifice ayant section de passage prédéterminée. De manière avantageuse, comme la pompe 1 fonctionne à débit constant, la section de passage prédéterminée de l'organe d'alimentation 6 permet de fournir un débit d'alimentation d6 qui est constant à la turbomachine principale T lorsqu'il n'y a pas d'autre prélèvement. De manière préférée, le débit de la pompe 1 ainsi que la section de passage prédéterminée de l'organe d'alimentation 6 sont déterminés de manière à fournir un débit d'alimentation nominal d6n, celui-ci étant déterminé pour être, d'une part, inférieur au débit de consigne de la turbomachine dT en phase de décollage S1 et, d'autre part, supérieur au débit de consigne de la turbomachine dT en phase de croisière S2 mais insuffisant à lui seul en phase de décollage S1. Ainsi, le débit d'alimentation nominal d6n est suffisant pour répondre aux besoins de la turbomachine principale T en phase de croisière S2. De préférence, le débit d'alimentation nominal d6n est entre 0% et 10% supérieur au débit de consigne de la turbomachine dT en phase de croisière S2. Un tel débit d'alimentation nominal d6n permet de réduire le régime de la pompe 1 et donc de réduire son encombrement et son coût.

Toujours en référence à la figure 2, le système de conditionnement SC comprend au moins un réservoir tampon 4 configuré pour alimenter la turbomachine principale T parallèlement à l'organe d'alimentation 6. Le réservoir tampon 4 est configuré pour être alimenté par un flux de carburant Q réchauffé. Ainsi, le réservoir tampon 4 permet de fournir un débit complémentaire pour suppléer le débit d'alimentation d6, en particulier, en phase de décollage S1 comme cela sera présenté par la suite.

Le réservoir tampon 4, appelé également « capacité de gaz », présente l'avantage de conditionner le carburant Q à l'état gazeux, ce qui permet de disposer de carburant Q pouvant être mis immédiatement à disposition de la turbomachine principale T.

En référence à la figure 2, le système de conditionnement SC comprend une première vanne V1 de contrôle de l'alimentation du réservoir tampon 4 en flux de carburant Q réchauffé, positionnée en amont du réservoir tampon 4, et une deuxième vanne V2 de contrôle de la distribution du flux de carburant Q réchauffé issu du réservoir tampon 4, positionnée en aval du réservoir tampon 4. Les vannes V1, V2 permettent ainsi de contrôler respectivement l'entrée et la sortie de carburant chauffé Q pour s'adapter de manière dynamique au débit de consigne dT alors que la pompe 1 fonctionne selon un régime constant. Ainsi, la première vanne V1 permet de contrôler un débit d'entrée d4e du réservoir tampon 4 tandis que la deuxième vanne V2 permet de contrôler un débit de sortie d4s du réservoir tampon 4. De manière préférée, la deuxième vanne V2 comporte un orifice sonique permettant de rendre le débit dans la deuxième vanne V2 indépendant des conditions en aval. La première vanne V1 possède un degré d'ouverture paramétrable comme cela sera présenté par la suite.

En référence à la figure 2, le système de conditionnement SC comprend un dispositif de régulation 5 configuré pour contrôler les vannes V1, V2. De préférence, le dispositif de régulation 5 se présente sous la forme d'un calculateur électronique et les vannes V1, V2 se présentent sous la forme d'électrovannes.

Le dispositif de régulation 5 est notamment configuré pour :
- ouvrir la deuxième vanne V2 lorsque le débit de consigne dT est supérieur au débit d'alimentation nominal d6n, et
- fermer la deuxième vanne V2 lorsque le débit de consigne dT est inférieur au débit d'alimentation nominal d6n.

Ainsi, le réservoir tampon 4 permet de suppléer de manière dynamique et réactive l'organe d'alimentation 6 pour suivre le débit de consigne dT. La deuxième vanne V2 est ainsi ouverte lors de la phase de décollage S1 pour augmenter le débit de sortie d4s du réservoir tampon 4 (Figure 3). De préférence, les flux de carburant issus de l'organe d'alimentation 6 et du réservoir tampon 4 sont mélangés préalablement à leur injection dans la turbomachine principale T. La deuxième vanne V2 est à l'inverse fermée lors des autres phases S2, S3, le débit de sortie d4s du réservoir tampon 4 étant alors nul (Figure 3).

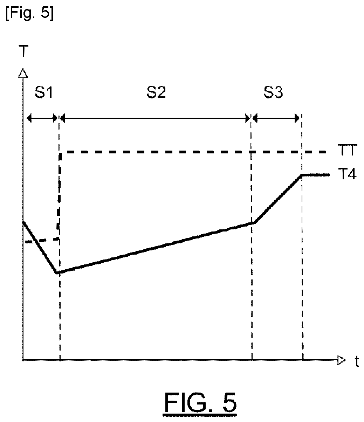

De manière préférée, le dispositif de régulation 5 est également configuré pour ouvrir/fermer la deuxième vanne V2 en fonction de la pression P4 (Figure 4) et de la température T4 (Figure 5) dans le réservoir tampon 4 afin d'assurer un débit de sortie d4s optimal.

Le dispositif de régulation 5 est en outre configuré pour :
- fermer la première vanne V1 lorsque le débit de consigne dT est supérieur au débit d'alimentation nominal d6n,
- faire varier le degré d'ouverture de la première vanne V1 en fonction d'une comparaison entre le débit d'alimentation nominal d6n et le débit de consigne dT.

De manière préférée, le degré d'ouverture obéit à une loi d'ouverture déterminée f du type f(d6n - dT). De manière avantageuse, le surplus de carburant est stocké de manière dynamique dans le réservoir tampon 4, ce qui est très avantageux. Ainsi, lorsque l'écart est faible, le réservoir tampon se remplit de manière douce pour absorber le surplus de débit. Cela permet d'éviter d'utiliser la pompe avec un régime trop élevé. A l'inverse, lorsque l'écart est important, le réservoir tampon se remplit de manière rapide pour absorber le surplus de débit. Le réservoir tampon 4 dispose ainsi de suffisamment de carburant pour assurer une nouvelle phase de décollage.

De manière alternative, le dispositif de régulation 5 est configuré pour
- ouvrir la première vanne V1 selon un premier degré d'ouverture lorsque la différence entre le débit d'alimentation nominal d6n et le débit de consigne dT est inférieure à un écart prédéterminé e (d6n-dT<e ou d6n-e<dT<d6n) et
- ouvrir la première vanne V1 selon un deuxième degré d'ouverture, supérieur au premier degré d'ouverture, lorsque la différence entre le débit d'alimentation nominal d6n et le débit de consigne dT est supérieure à un écart prédéterminé e (d6n-dT>e ou dT<d6n-e).

Dans cet exemple, l'écart e est prédéterminé pour commander une ouverture de la première vanne V1 selon un premier degré d'ouverture lors de la phase de croisière S2 et pour commander une ouverture de la première vanne V1 selon un deuxième degré d'ouverture lors de la phase d'atterrissage S3. Ainsi, plus le débit de consigne dT est faible, plus la première vanne V1 peut être ouverte pour remplir le réservoir tampon 4.

La première vanne V1 est fermée pendant la phase de décollage S1 puis ouverte selon un premier degré d'ouverture lors de la phase de croisière S2 puis selon un deuxième degré d'ouverture (plus grand que le premier) lors de la phase d'atterrissage S3 afin d'optimiser le remplissage du réservoir tampon 4 lorsque les besoins sont plus faibles. On dispose ainsi toujours d'un réservoir tampon 4 suffisamment rempli pour une nouvelle phase de décollage S1.

En référence à la figure 4, la pression P4 dans le réservoir tampon 4 décroit ainsi lors de la phase de décollage S1, puis peut augmenter faiblement au cours de la phase de croisière S2 avant d'augmenter de manière importante lors de la phase d'atterrissage S3. Lors de la phase de décollage S1, la pression P4 dans le réservoir tampon 4 décroit du fait de la détente thermodynamique du flux de carburant Q, ce qui entraine une baisse de la température T4 du réservoir tampon 4 (Figure 5). La température T4 augmente ensuite faiblement au cours de la phase de croisière S2 avant d'augmenter de manière importante lors de la phase d'atterrissage S3 du fait du remplissage du réservoir tampon 4.

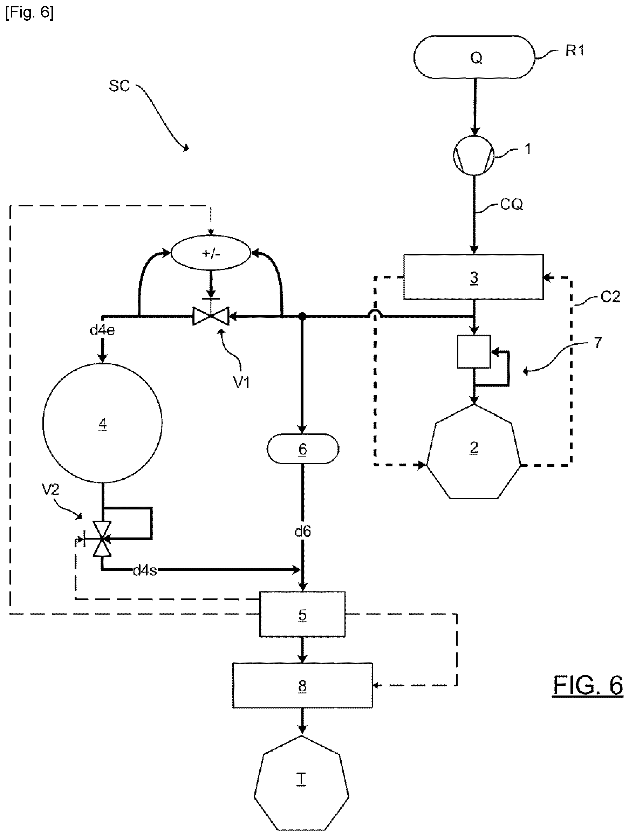

### Deuxième forme de réalisation (Figure 6)

En référence à la figure 6, il est représenté une deuxième forme de réalisation du système de conditionnement de carburant SC. Par souci de clarté et de concision, les éléments communs ou analogues à la première forme de réalisation ne sont pas présentés de nouveau.

Comme illustré à la figure 6, le système de conditionnement de carburant SC comprend un échangeur de chaleur auxiliaire 8 monté entre la deuxième vanne V2 et la turbomachine principale T configuré pour chauffer le flux de carburant Q issu du réservoir tampon 4 et issu de l'organe d'alimentation 6 de manière à ce que la température du carburant à l'injection dans la turbomachine T, dite température turbomachine TT, soit sensiblement constante lors de la phase de croisière S2.

Ainsi, la baisse de température T4 du flux de carburant Q issu du réservoir tampon 4, liée à sa détente thermodynamique, peut être compensée de manière pratique afin d'alimenter la turbomachine principale T. L'échangeur de chaleur auxiliaire 8 peut fournir des calories issues de différentes sources de chaleur, en particulier, issues de la turbomachine principale T. De préférence, l'échangeur de chaleur auxiliaire 8 est paramétrable, en particulier par le dispositif de régulation 5, de manière à permettre de réguler l'apport en calories en fonction des phases d'utilisation.

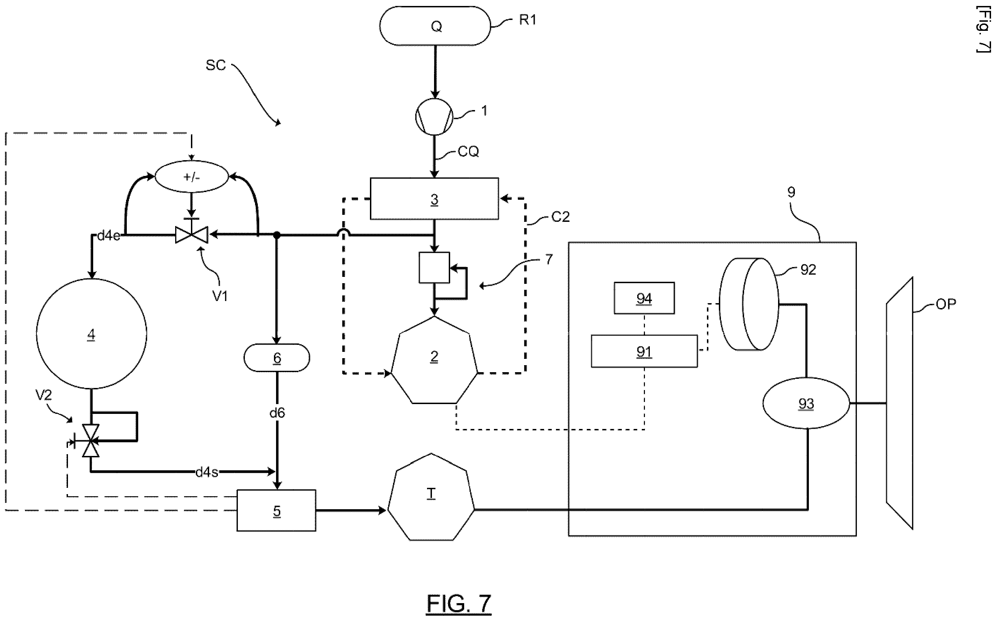

### Troisième forme de réalisation (Figure 7)

En référence à la figure 7, il est représenté une troisième forme de réalisation du système de conditionnement de carburant SC. Par souci de clarté et de concision, les éléments communs ou analogues à la première forme de réalisation ne sont pas présentés de nouveau.

Dans la première forme de réalisation, la turbomachine principale T est de préférence reliée à un organe propulsif qu'elle entraine, par exemple, une hélice ou une soufflante.

En référence à la figure 7, le système de conditionnement de carburant SC comprend un organe propulsif OP et un système d'entrainement 9 dudit organe propulsif OP. Le système d'entrainement 9 est configuré pour être alimenté par la turbomachine principale T et par le dispositif de génération de puissance auxiliaire 2. Ainsi, on tire avantage de l'énergie générée par le dispositif de génération de puissance auxiliaire 2 pour participer à la propulsion. Cela permet avantageusement de réduire la dimension de la turbomachine principale T.

Dans l'exemple de la figure 7, le dispositif de génération de puissance auxiliaire 2 est une pile à combustible qui fournit une puissance électrique. Le système d'entrainement 9 comporte à cet effet un réseau électrique 91 qui alimente un moteur électrique 92 afin de convertir la puissance électrique en un couple mécanique. Le système d'entrainement 9 comporte en outre une boite de transmission 93 configurée pour fournir un couple mécanique global à l'organe propulsif OP à partir des couples mécaniques du moteur électrique 92 et de la turbomachine principale T. De préférence, une batterie électrique 94 est prévue pour permettre de stocker l'excès d'énergie électrique ou d'apporter un complément de puissance électrique lors des phases de changement de régime.

Lorsque le dispositif de génération de puissance auxiliaire 2 est une turbomachine auxiliaire, le système d'entrainement 9 peut avantageusement se présenter sous la forme d'une boite de transmission configurée pour fournir un couple mécanique global à l'organe propulsif OP à partir des couples mécaniques de la turbomachine auxiliaire et de la turbomachine principale T.

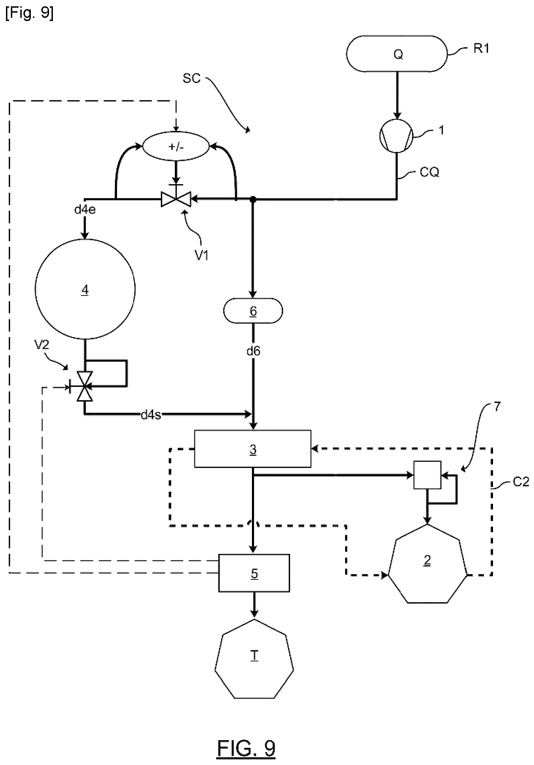

Il a été présenté précédemment un échangeur de chaleur 3 positionné en amont du réservoir tampon 4 (Figure 2) mais il va de soi qu'il pourrait être positionné en aval dudit réservoir tampon 4 (Figure 9). Cela permet avantageusement de stocker le carburant dans le réservoir tampon 4 à l'état liquide avec un moindre encombrement. Lorsque l'échangeur de chaleur 3 est positionné en aval dudit réservoir tampon 4, le dispositif de génération de puissance auxiliaire 2 est alimenté avec du carburant réchauffé. Autrement dit, le dispositif de génération de puissance auxiliaire 2 est positionné en aval de l'échangeur de chaleur 3 comme illustré à la figure 9.

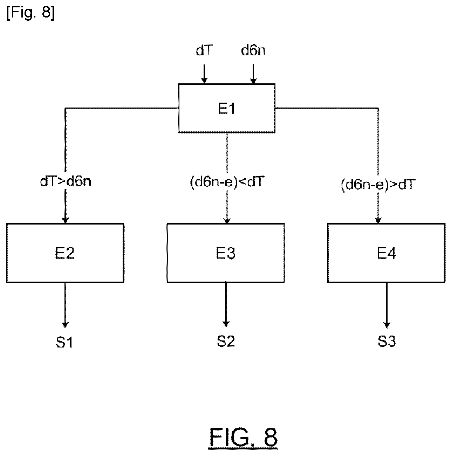

### Procédé d'utilisation (Figure 8)

Un exemple de mise en œuvre de l'invention va être présenté en référence à la figure 8. Dans cet exemple, la pompe 1 et le dispositif de génération de puissance auxiliaire 2 fonctionnent tous les deux à un régime constant prédéterminé de haut rendement. Ainsi, leur fonctionnement est optimisé. On peut ainsi recourir à une pompe 1 et à un dispositif de génération de puissance auxiliaire 2 de conceptions simples et de coûts réduits étant donné qu'ils ne doivent pas fonctionner sur une grande plage de fonctionnement. Cela est particulièrement avantageux pour une pile à combustible dont le rendement est optimal sur une plage de régime réduite. De préférence, le débit de la pompe 1 est choisi dans une plage intermédiaire entre le débit minimal et le débit maximal requis par la turbomachine principale T et le dispositif de génération de puissance auxiliaire 2 sur le domaine de fonctionnement.

Dans cet exemple, le débit d'alimentation nominal d6n est inférieur au débit de consigne de la turbomachine dT en phase de décollage S1 et supérieur au débit de consigne de la turbomachine dT en phase de croisière S2

En référence aux figures 3 et 8, le procédé comprend une étape E1 consistant à comparer le débit d'alimentation nominal d6n au débit de consigne de la turbomachine dT.

Lors de la phase de décollage S1, la consigne de débit dT est supérieure au débit d'alimentation nominal d6n, le procédé comprend une étape E2 consistant à ouvrir la deuxième vanne V2 pour distribuer le carburant du réservoir tampon 4 et à fermer la première vanne V1. Ainsi, le réservoir tampon 4 fournit un débit de sortie d4s qui s'ajoute au débit d'alimentation nominal d6n.

Lors de la phase de croisière S2, la consigne de débit dT est inférieure au débit d'alimentation nominal d6n. Le procédé comprend une étape E3 consistant à fermer la deuxième vanne V2 et à ouvrir la première vanne V1 selon un premier degré d'ouverture de manière à remplir progressivement le réservoir tampon 4 avec le surplus de débit.

Lors de la phase d'atterrissage S3, la consigne de débit dT est inférieure au débit d'alimentation nominal d6n. Le procédé comprend une étape E4 consistant à fermer la deuxième vanne V2 et à ouvrir la première vanne V1 selon un deuxième degré d'ouverture de manière à remplir de manière rapide le réservoir tampon 4 avec le surplus de débit.

De manière avantageuse, la puissance mécanique/électrique du dispositif de génération de puissance auxiliaire 2 peut être utilisée comme présenté à la figure 7.

Grâce à l'invention, le carburant Q est conditionné de manière pratique avec un haut rendement, ce qui permet de recourir à des équipements optimisés et fiables ayant une plage de fonctionnement réduite. Lors de la phase de décollage S1, le réservoir tampon 4 permet de mobiliser de manière rapide et pratique du carburant réchauffé.

## Revendications

1. Système de conditionnement de carburant (SC) configuré pour alimenter une turbomachine d'aéronef, dite turbomachine principale (T), à partir de carburant (Q) issu d'un réservoir cryogénique (R1), la turbomachine principale (T) ayant un débit de consigne (dT) de carburant (Q), qui est fonction de la phase de déplacement de l'aéronef, le système de conditionnement (SC) comprenant :
- un circuit de carburant (CQ) relié en entrée au réservoir cryogénique (R1) et en sortie à la turbomachine principale (T),
- une pompe (1) configurée pour faire circuler un flux de carburant (Q) d'amont en aval dans le circuit de carburant (CQ), la pompe (1) étant configurée pour fonctionner à un régime constant prédéterminé,
- au moins un échangeur de chaleur (3) configuré pour transmettre des calories issues d'une source chaude (2) au flux de carburant (Q) via un circuit de chauffage (C2), et
- un organe d'alimentation (6) de la turbomachine principale (T) avec un flux de carburant (Q), l'organe d'alimentation (6) définissant une section de passage prédéterminée, l'organe d'alimentation (6) étant configuré pour fournir un débit d'alimentation nominal (d6n) lorsque la pompe (1) fonctionne à un régime constant prédéterminé, **caractérisé en ce que** le système de conditionnement de carburant (SC) comprend en outre :
- au moins un réservoir tampon (4) configuré pour alimenter la turbomachine principale (T) parallèlement à l'organe d'alimentation (6), le réservoir tampon (4) étant configuré pour être alimenté par un flux de carburant (Q),
- au moins une première vanne (V1) de contrôle de l'alimentation du réservoir tampon (4) en flux de carburant (Q),
- au moins une deuxième vanne (V2) de contrôle de la distribution du flux de carburant (Q) issu du réservoir tampon (4), et
- un dispositif de régulation (5) configuré pour ouvrir la deuxième vanne (V2) lorsque le débit de consigne (dT) est supérieur au débit d'alimentation nominal (d6n).

2. Système de conditionnement de carburant (SC) selon la revendication 1, dans lequel le dispositif de régulation (5) est configuré pour fermer la deuxième vanne (V2) lorsque le débit de consigne (dT) est inférieur au débit d'alimentation nominal (d6n).

3. Système de conditionnement de carburant (SC) selon l'une des revendications 1 à 2, dans lequel le dispositif de régulation (5) est configuré pour fermer la première vanne (V1) lorsque le débit de consigne (dT) est supérieur au débit d'alimentation nominal (d6n).

4. Système de conditionnement de carburant (SC) selon l'une des revendications 1 à 3, dans lequel, la première vanne (V1) ayant un degré d'ouverture paramétrable, le dispositif de régulation (5) est configuré pour faire varier le degré d'ouverture de la première vanne (V1) en fonction d'une comparaison entre le débit d'alimentation nominal (d6n) et le débit de consigne (dT).

5. Système de conditionnement de carburant (SC) selon l'une des revendications 1 à 4, comprenant au moins un échangeur de chaleur auxiliaire (8) monté entre la deuxième vanne (V2) et la turbomachine principale (T) de manière à chauffer le flux de carburant (Q) préalablement à son injection dans la turbomachine principale (T).

6. Système de conditionnement de carburant (SC) selon l'une des revendications 1 à 5, dans lequel la source chaude est un dispositif de génération de puissance auxiliaire (2) alimenté par le circuit de carburant (Q).

7. Système de conditionnement de carburant (SC) selon la revendication 6, dans lequel le dispositif de génération de puissance auxiliaire (2) est configuré pour fonctionner à régime constant.

8. Système de conditionnement de carburant (SC) selon l'une des revendications 6 à 7, dans lequel le dispositif de génération de puissance auxiliaire (2) est une turbomachine auxiliaire ou une pile à combustible.

9. Système de conditionnement de carburant (SC) selon l'une des revendications 6 à 8, comprenant au moins un organe propulsif (OP) et un système d'entrainement (9) dudit organe propulsif (OP), le système d'entrainement (9) étant configuré pour être alimenté par la turbomachine principale (T) et par le dispositif de génération de puissance auxiliaire (2).

10. Système de conditionnement de carburant (SC) selon l'une des revendications 1 à 9, dans lequel le carburant est du dihydrogène.

11. Système de conditionnement de carburant (SC) selon l'une des revendications 1 à 10, dans lequel le débit d'alimentation nominal (d6n) est déterminé pour être supérieur au débit de consigne (dT) en phase de croisière et inférieur au débit de consigne (dT) en phase de décollage.

12. Procédé d'alimentation en carburant d'une turbomachine d'aéronef, dite turbomachine principale (T), à partir de carburant (Q) issu d'un réservoir cryogénique (R1), la turbomachine principale (T) ayant un débit de consigne (dT) de carburant (Q), qui est fonction de la phase de déplacement de l'aéronef, le procédé comprenant des étapes consistant à :
- faire circuler un flux de carburant (Q) d'amont en aval dans un circuit de carburant (CQ) au moyen d'une pompe (1) fonctionnant à un régime constant prédéterminé, la pompe (1) fournissant un débit d'alimentation nominal (d6n) via un organe d'alimentation (6),
- transmettre des calories issues d'une source chaude (2) au flux de carburant (Q) via un circuit de chauffage (C2),
- vider un réservoir tampon (4), alimenté par le circuit de carburant (CQ), lorsque le débit de consigne (dT) est supérieur au débit d'alimentation nominal (d6n) pour alimenter la turbomachine principale (T) parallèlement à l'organe d'alimentation (6).

## Patentansprüche

1. Kraftstoffaufbereitungssystem (SC), das zur Versorgung einer Flugzeug-Turbomaschine, bezeichnet als Hauptturbomaschine (T), mit Kraftstoff (Q) aus einem Kryogenbehälter (R1) ausgelegt ist, wobei die Hauptturbomaschine (T) eine Soll-Zufuhr (dT) von Kraftstoff (Q) aufweist, die von der Flugphase des Flugzeugs abhängt, wobei das Aufbereitungssystem (SC) umfasst:
- einen Kraftstoffkreis (CQ), der am Eingang mit dem Kryogenbehälter (R1) und am Ausgang mit der Hauptturbomaschine (T) verbunden ist,
- eine Pumpe (1), die ausgelegt ist, damit ein Kraftstoffstrom (Q) von stromaufwärts nach stromabwärts im Kraftstoffkreis (CQ) strömt, wobei die Pumpe (1) für die Arbeit mit einer vorbestimmten konstanten Drehzahl ausgelegt ist,
- mindestens einen Wärmetauscher (3), der zur Übertragung von Wärme aus einer Wärmequelle (2) über einen Heizkreis (C2) an den Kraftstoffstrom (Q) ausgelegt ist,
- ein Organ zur Versorgung (6) der Hauptturbomaschine (T) mit einem Kraftstoffstrom (Q), wobei das Versorgungsorgan (6) einen vorbestimmten Durchgangsquerschnitt definiert, wobei das Versorgungsorgan (6) ausgelegt ist, um eine Nennversorgungszufuhr (d6n) bereitzustellen, wenn die Pumpe (1) mit einer vorbestimmten konstanten Drehzahl arbeitet, **dadurch gekennzeichnet, dass** das Kraftstoffaufbereitungssystem (SC) ferner umfasst:
- mindestens einen Pufferspeicher (4), der zur Versorgung der Hauptturbomaschine (T) parallel zum Versorgungsorgan (6) ausgelegt ist, wobei der Pufferspeicher (4) zur Versorgung durch einen Kraftstoffstrom (Q) ausgelegt ist,
- mindestens ein erstes Ventil (V1) zur Steuerung der Versorgung des Pufferbehälters (4) mit Kraftstoffstrom (Q),
- mindestens ein zweites Ventil (V2) zur Steuerung der Verteilung des aus dem Pufferbehälter (4) kommenden Stroms aus Kraftstoff (Q) und
- eine Regelvorrichtung (5), die so ausgelegt ist, dass sie das zweite Ventil (V2) öffnet, wenn die Soll-Zufuhr (dT) größer ist als die Nennversorgungszufuhr (d6n).

2. Kraftstoffaufbereitungssystem (SC) nach Anspruch 1, wobei die Regelvorrichtung (5) so ausgelegt ist, dass sie das zweite Ventil (V2) schließt, wenn die Soll-Zufuhr (dT) unter der Nennversorgungszufuhr (d6n) liegt.

3. Kraftstoffaufbereitungssystem (SC) nach einem der Ansprüche 1 bis 2, wobei die Regelvorrichtung (5) so ausgelegt ist, dass sie das erste Ventil (V1) schließt, wenn die Soll-Zufuhr (dT) über der Nennversorgungszufuhr (d6n) liegt.

4. Kraftstoffaufbereitungssystem (SC) nach einem der Ansprüche 1 bis 3, wobei, wenn das erste Ventil (V1) einen einstellbaren Öffnungsgrad aufweist, die Regelvorrichtung (5) so ausgelegt ist, dass sie den Öffnungsgrad des ersten Ventils (V1) in Abhängigkeit von einem Vergleich zwischen der Nennversorgungszufuhr (d6n) und der Soll-Zufuhr (dT) variiert.

5. Kraftstoffaufbereitungssystem (SC) nach einem der Ansprüche 1 bis 4, umfassend mindestens einen Hilfswärmetauscher (8), der zwischen dem zweiten Ventil (V2) und der Hauptturbomaschine (T) angebracht ist, um den Kraftstoffstrom (Q) vor seiner Einspritzung in die Hauptturbomaschine (T) zu erwärmen.

6. Kraftstoffaufbereitungssystem (SC) nach einem der Ansprüche 1 bis 5, wobei die Wärmequelle eine Vorrichtung zur Erzeugung von Hilfsleistung (2) ist, die vom Kraftstoffkreis (Q) versorgt wird.

7. Kraftstoffaufbereitungssystem (SC) nach Anspruch 6, wobei die Vorrichtung zur Erzeugung von Hilfsleistung (2) für den Betrieb mit konstanter Drehzahl ausgelegt ist.

8. Kraftstoffaufbereitungssystem (SC) nach einem der Ansprüche 6 bis 7, wobei die Vorrichtung zur Erzeugung von Hilfsleistung (2) eine Hilfsturbomaschine oder eine Brennstoffzelle ist.

9. Kraftstoffaufbereitungssystem (SC) nach einem der Ansprüche 6 bis 8, umfassend mindestens ein Antriebselement (OP) und ein Antriebssystem (9) des Antriebselements (OP), wobei das Antriebssystem (9) so ausgelegt ist, dass es von der Hauptturbomaschine (T) und der Vorrichtung zur Erzeugung von Hilfsleistung (2) angetrieben wird.

10. Kraftstoffaufbereitungssystem (SC) nach einem der Ansprüche 1 bis 9, wobei der Kraftstoff Dihydrogen ist.

11. Kraftstoffaufbereitungssystem (SC) nach einem der Ansprüche 1 bis 10, wobei die Nennversorgungszufuhr (d6n) so bestimmt ist, dass sie in der Reisephase größer als die Soll-Zufuhr (dT) und in der Startphase kleiner als die Soll-Zufuhr (dT) ist.

12. Verfahren zur Versorgung einer Turbomaschine eines Flugzeugs, bezeichnet als Hauptturbomaschine (T), mit Kraftstoff anhand von Kraftstoff (Q) aus einem Kryogenbehälter (R1), wobei die Hauptturbomaschine (T) eine Soll-Zufuhr (dT) mit Kraftstoff (Q) hat, die von der Flugphase des Flugzeugs abhängt, wobei das Verfahren die folgenden Schritte umfasst:
- Versetzen eines Kraftstoffstroms (Q) von stromaufwärts nach stromabwärts in einem Kraftstoffkreis (CQ) mittels einer Pumpe (1), die mit einer vorbestimmten konstanten Drehzahl arbeitet, in Zirkulation, wobei die Pumpe (1) über ein Versorgungsorgan (6) eine Nennversorgungszufuhr (d6n) bereitstellt,
- Übertragen von Wärme aus einer Wärmequelle (2) über einen Heizkreis (C2) auf den Kraftstoffstrom (Q),
- Entleeren eines Puffertanks (4), der von dem Kraftstoffkreis (CQ) gespeist wird, wenn die Soll-Zufuhr (dT) größer ist als die Nennversorgungszufuhr (d6n), um die Hauptturbomaschine (T) parallel zum Versorgungsorgan zu versorgen.

## Claims

1. System for conditioning fuel (SC) configured to supply an aircraft turbomachine, referred to as main turbomachine (T), with fuel (Q) from a cryogenic tank (R1), the main turbomachine (T) having a setpoint flow rate (dT) of fuel (Q), which is according to the phase of movement of the aircraft, the conditioning system (SC) comprising:
- a fuel circuit (QC) connected at the inlet to the cryogenic tank (R1) and at the outlet to the main turbomachine (T),
- a pump (1) configured to circulate a fuel flow (Q) from upstream to downstream in the fuel circuit (CQ), the pump (1) being configured to operate at a predetermined constant speed,
- at least one heat exchanger (3) configured to transmit calories from a hot source (2) to the fuel flow (Q) via a heating circuit (C2), and
- a supply member (6) of the main turbomachine (T) with a fuel flow (Q), the supply member (6) defining a predetermined flow cross-section, the supply member (6) being configured to provide a nominal supply flow rate (d6n) when the pump (1) operates at a predetermined constant speed, **characterized in that** the conditioning system (SC) further comprises:
- at least one buffer tank (4) configured to supply the main turbomachine (T) parallel to the supply member (6), the buffer tank (4) being configured to be supplied by a fuel flow (Q),
- at least one first valve (V1) for controlling the supply of the fuel flow (Q) to the buffer tank (4),
- at least one second valve (V2) for controlling the distribution of the fuel flow (Q) from the buffer tank (4), and
- a regulating device (5) configured to open the second valve (V2) when the setpoint flow rate (dT) is higher than the nominal supply flow rate (d6n).

2. System for conditioning fuel (SC) according to claim 1, wherein the regulating device (5) is configured to close the second valve (V2) when the setpoint flow rate (dT) is lower than the nominal supply flow rate (d6n).

3. System for conditioning fuel (SC) according to one of claims 1 to 2, wherein the regulating device (5) is configured to close the first valve (V1) when the setpoint flow rate (dT) is higher than the nominal supply flow rate (d6n).

4. System for conditioning fuel (SC) according to one of claims 1 to 3, wherein, the first valve (V1) having a configurable degree of opening, the regulating device (5) is configured to vary the degree of opening of the first valve (V1) according to a comparison between the nominal supply flow rate (d6n) and the setpoint flow rate (dT).

5. System for conditioning fuel (SC) according to one of claims 1 to 4, comprising at least one auxiliary heat exchanger (8) mounted between the second valve (V2) and the main turbomachine (T) so as to heat the fuel flow (Q) prior to its injection into the main turbomachine (T).

6. System for conditioning fuel (SC) according to one of claims 1 to 5, wherein the hot source is an auxiliary power generation device (2) supplied by the fuel circuit (Q).

7. System for conditioning fuel (SC) according to claim 6, wherein the auxiliary power generation device (2) is configured to operate at a constant speed.

8. System for conditioning fuel (SC) according to one of claims 6 to 7, wherein the auxiliary power generation device (2) is an auxiliary turbomachine or fuel cell.

9. System for conditioning fuel (SC) according to one of claims 6 to 8, comprising at least one propulsion member (OP) and a drive system (9) of said propulsion member (OP), the drive system (9) being configured to be supplied by the main turbomachine (T) and by the auxiliary power generation device (2).

10. System for conditioning fuel (SC) according to one of claims 1 to 9, wherein the fuel is dihydrogen.

11. System for conditioning fuel (SC) according to one of claims 1 to 10, wherein the nominal supply flow rate (d6n) is determined to be higher than the setpoint flow rate (dT) in the cruising phase and lower than the setpoint flow rate (dT) in the take-off phase.

12. Method for supplying fuel to an aircraft turbomachine, referred to as main turbomachine (T), from fuel (Q) from a cryogenic tank (R1), the main turbomachine (T) having a setpoint flow rate (dT) of fuel (Q), which is according to the aircraft movement phase, the method comprising steps consisting of:
- circulating a fuel flow (Q) from upstream to downstream in a fuel circuit (CQ) by means of a pump (1) operating at a predetermined constant speed, the pump (1) providing a nominal supply flow rate (d6n) via a supply member (6),
- transmitting calories from a hot source (2) to the fuel flow (Q) via a heating circuit (C2),
- emptying a buffer tank (4), supplied by the fuel circuit (CQ), when the setpoint flow rate (dT) is higher than the nominal supply flow rate (d6n) to supply the main turbomachine (T) parallel to the supply member (6).
